(19) Europäisches Patentamt
European Patent Office
Office européen des brevets

(11) EP 4 756 666 A1

(12) EUROPEAN PATENT APPLICATION
published in accordance with Art. 153(4) EPC

(43) Date of publication:
10.06.2026 Bulletin 2026/24

(21) Application number: 24852215.3

(22) Date of filing: 02.08.2024

(51) International Patent Classification (IPC):
G06F 40/205 (2020.01)    G06F 40/253 (2020.01)
G06F 40/268 (2020.01)    G06F 40/289 (2020.01)
G06F 40/151 (2020.01)    G06N 20/00 (2019.01)

(52) Cooperative Patent Classification (CPC):
G06F 40/151; G06F 40/205; G06F 40/253;
G06F 40/268; G06F 40/289; G06N 20/00

(86) International application number:
PCT/KR2024/011396

(87) International publication number:
WO 2025/033861 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.08.2023 KR 20230101948

(71) Applicant: Choi, Jo Sik
Gimpo-si Gyeonggi-do 10008 (KR)

(72) Inventor: Choi, Jo Sik
Gimpo-si Gyeonggi-do 10008 (KR)

(74) Representative: Cabinet Chaillot
16/20, avenue de l'Agent Sarre
B.P. 74
92703 Colombes Cedex (FR)

(54) **METHOD FOR ANALYZING LANGUAGE STRUCTURE BY USING LINGUISTIC EXPRESSION**

(57) The present invention relates to a method for analyzing the structure of more than 7,000 languages existing on the earth, by using linguistic expressions, the method comprising the steps of: analyzing a morpheme and a syntax of a target sentence by a morpheme and syntax analysis unit; and calculating, by a linguistic expression calculation unit, on the basis of a pre-learned linguistic expression learning algorithm provided from a linguistic expression learning algorithm, a linguistic expression for the morpheme and the syntax of the sentence analyzed by the morpheme and syntax analysis unit, wherein the linguistic expression calculation unit divides the sentence into four parts including an upper left part, a lower left part, an upper right part, and a lower right part, around a sentence center symbol, assigns a subject symbol to the upper left part, assigns a core verb symbol to the lower left part, assigns a verb type symbol (or a predicate symbol) to the lower right part, assigns a non-predicate symbol for the remaining phrase, except for the subject and the verb, in the upper right part, and then inputs symbolized specific information such as a character count symbol (.) indicating the character count of a noun, an adjective, and the like with a number, along with person symbols (1 to 4) indicating a first person, a second person, a third person, and a non-person to at least one of four subscripts including an upper left script, a lower left subscript, an upper right subscript, and a lower right subscript of each assigned symbol. Accordingly, a specific sentence of a specific language is precisely analyzed into an accurate sentence structure, thereby improving the efficiency of linguistic usages such as sentence recognition, interpretation, translation, search, and the like.

【Figure 5】

EP 4 756 666 A1

**Description**

[Technical Field]

The present invention relates to a method for analysing a language structure using a linguistic expression. More specifically, the invention relates to a method for syntactically analysing a language structure by means of a linguistic expression that hierarchically subdivides and represents both functional constituents and morphological constituents of a sentence in a specific language, thereby analysing the syntactic principles according to which words form a sentence.

[Background Art]

With the development of artificial intelligence (AI: Artificial Intelligence) and machine learning, the analysis of natural languages (including Esperanto) used by humans for communication in daily life, the understanding of natural language inputs by electronic devices so as to enable operation based thereon, and the generation of natural language from content such as videos or tables in a form understandable to humans have emerged as major technical challenges.

Linguistics is a field of study that investigates the principles according to which language arises, evolves, and is used. It has been applied in various disciplines such as anthropology, psychology, semiotics, and cryptography, and has significantly influenced foreign language learning. In recent years, however, its development and application have become increasingly active in connection with artificial intelligence based on natural language processing, including question-and-answer systems, information retrieval, speech input, information analysis, foreign language translation, speech recognition, and text representation, in order to facilitate the convenient use of electronic devices.

In order to process more than 7,000 natural languages existing on Earth, it is necessary to accurately analyse sentence structure, and the accuracy of such analysis increases as the structure of a sentence is more finely subdivided.

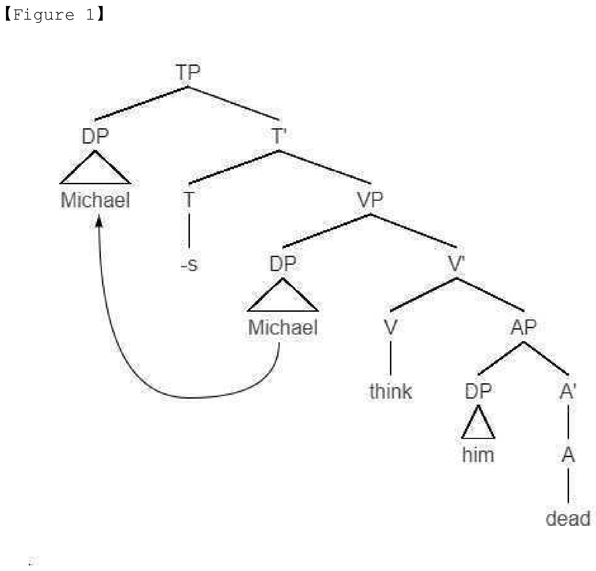

As one method for representing sentence structure, a hierarchical tree diagram, as illustrated in FIG. 1, has been used to classify and display the structure of a sentence.

However, in such tree diagrams, the structure becomes increasingly complex as the sentence itself becomes more complex.

Moreover, despite such structural complexity, consistent grammatical information-such as person, nominative case, genitive case, gender, singular, and plural-is not explicitly represented, resulting in limitations in analysing sentence structure.

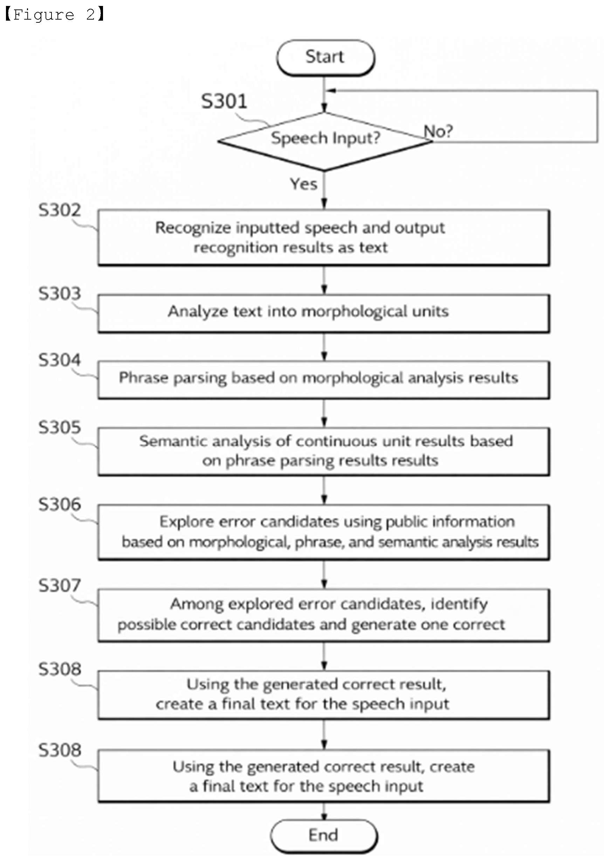

Meanwhile, in relation to language analysis, Korean Patent Publication No. 10-2018-0057922, cited herein as prior art, discloses a post-processing-based speech recognition error correction apparatus using language analysis, as illustrated in FIG. 2.
The disclosed apparatus includes:

a speech recognition unit configured to recognise an input speech signal and output the recognised result in text form;
a language recognition unit configured to perform morpheme analysis on the output text sentence, perform syntactic analysis based on the morpheme analysis result, and perform semantic analysis in units of dependency structure with respect to the syntactic analysis result;
an error candidate searching unit configured to search for error candidates from the analysis results obtained through the morpheme analysis, syntactic analysis, and semantic analysis, using predefined co-occurrence information;
a correct-answer candidate searching unit configured to identify possible correct-answer candidates for the searched error candidates and generate a final correct result; and a text generation unit configured to generate a final corrected text corresponding to the input speech by using the generated correct-answer candidate.

Accordingly, the prior art enables correction of errors occurring in speech recognition through post-processing.

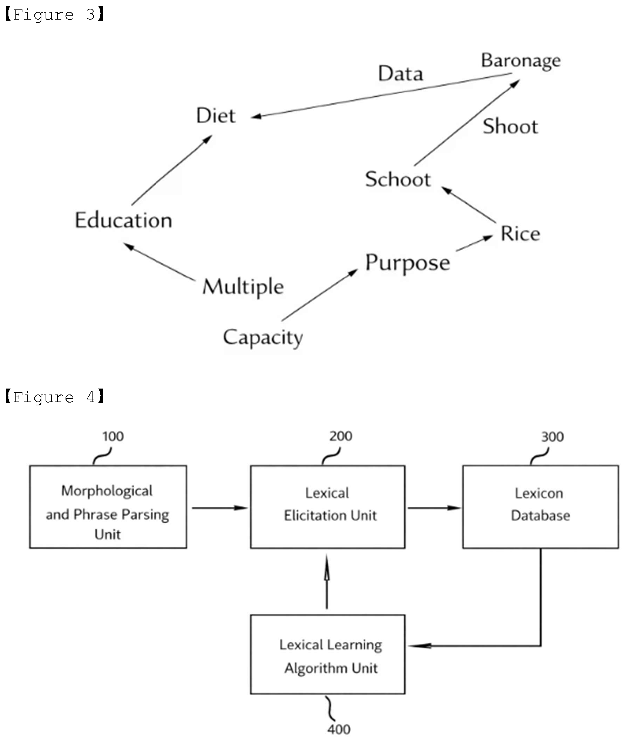

However, as illustrated in FIG. 3, the result of syntactic analysis in the post-processing-based speech recognition error correction apparatus using language analysis according to the prior art merely lists the syntactic constituents of a sentence, and does not provide subdivided classification information regarding the functional and morphological composition of each constituent.

For example, in the conventional approach, although the syntactic structure of a sentence is decomposed and displayed, specific information relating to each constituent and subdivided information regarding the overall structure of the sentence are not provided.

In other words, information indicating whether each constituent functions as a subject, predicate, or modifier; grammatical information relating to the subject, such as person, gender, and case (e.g. nominative or genitive); information relating to the predicate, such as the type of verb determining the sentence structure; and, in the case of a non-predicate element, information indicating whether it constitutes a word, a derived phrase, a subordinate clause, a negative sentence, or an interrogative sentence, are not systematically classified. Accordingly, limitations exist in analysing language structure.

[Detailed Description of the Invention]

[Technical Problem]

The present invention has been devised in order to solve the aforementioned problem, and an object thereof is to provide a method for analysing a language structure using a linguistic expression, wherein, among more than 7,000 languages existing on Earth, the sentence structure of a specific language is subdivided in a three-dimensional and hierarchical manner down to the minimal structural level, including the most complex structures, and is entirely represented in the form of a linguistic expression, thereby enabling detailed and precise structural analysis of sentences in the respective language.

Although the objects of the present invention have been described above in detail, the invention is not limited to the aforementioned objects, and additional objects derived in the course of achieving the above-described objects are also included within the scope of the problems addressed by the present invention.

[Means for Solving the Problem]

In a preferred embodiment of the present invention, in order to solve the aforementioned problem, a method for analysing a structure of a language using a linguistic expression is provided, the method comprising:

> analysing, by a morpheme and syntax analysis unit, morphemes and syntactic structure of a target sentence; and
> generating, by a linguistic expression calculation unit, a linguistic expression for the morphemes and syntactic structure of the sentence analysed by the morpheme and syntax analysis unit, based on a pre-trained linguistic expression learning algorithm provided by a linguistic expression learning algorithm unit,
> wherein the linguistic expression calculation unit:

>> divides the sentence into four quadrants centred on a sentence centre symbol, namely an upper-left quadrant, a lower-left quadrant, an upper-right quadrant, and a lower-right quadrant;
>> assigns a subject symbol to the upper-left quadrant;
>> assigns a core verb symbol to the lower-left quadrant;
>> assigns a verb-type symbol to the lower-right quadrant; and
>> assigns, to the upper-right quadrant, a non-predicate symbol representing the remaining phrase excluding the subject and the verb.

In another preferred embodiment of the present invention, in order to solve the aforementioned problem and based on the above-described embodiment, the sentence centre symbol, the subject symbol, the core verb symbol, the verb-type symbol, and the non-predicate symbol representing the remaining phrase each include four subscript positions, namely an upper-left subscript, a lower-left subscript, an upper-right subscript, and a lower-right subscript, thereby providing a method for analysing a structure of a language using a linguistic expression.

In another preferred embodiment of the present invention, in order to solve the aforementioned problem and based on the above-described embodiment, the verb-type symbol comprises:

> a first verb (V1) symbol representing all intransitive verbs other than the verb "be";
> a second verb (V2) symbol representing the verb "be";
> a third verb (V3) symbol representing all transitive verbs except a fourth verb (V4); and
> a fourth verb (V4) symbol representing a transitive verb requiring both an object and an object complement,
> thereby providing a method for analysing a structure of a language using a linguistic expression.

In another preferred embodiment of the present invention, at least one of an upper-left subscript, lower-left subscript, upper-right subscript, or lower-right subscript of the verb-type symbol is assigned, for each of the V1 to V4 symbols, one selected from:

> a person indicator representing grammatical person;
> a number indicator representing singular or plural; and
> a tense indicator selected from base form, present tense, past tense, present perfect tense, or past perfect tense,
> thereby providing a method for analysing a structure of a language using a linguistic expression.

In another preferred embodiment of the present invention, the subject symbol and the non-predicate symbol comprise at least one selected from:

> a noun symbol representing a noun;
> an adjective symbol representing an adjective;
> an adverbial symbol representing an adverb or a prepositional phrase;
> an infinitive-form symbol representing a "to" infinitive or a bare infinitive;
> a gerund or participle symbol representing a verb in the "-ing" form;
> an "-ed" form symbol representing a verb in the "-ed" form;
> a being-participle symbol representing a "being + past participle" form; and
> a derived-clause symbol representing a subordinate clause,
> thereby providing a method for analysing a structure of a language using a linguistic expression.

In another preferred embodiment of the present invention, in order to solve the aforementioned problem and based on the above-described embodiment, the subject symbol and the non-predicate symbol may further include one or more indicators assigned to any one of four subscript positions centred on the respective symbol, namely an upper-left, lower-left, upper-right, or lower-right position. At least one of the following indicators may be assigned:

a person indicator (1-4) representing first person, second person, third person, or impersonal form;
a character-count indicator (.) together with a numeral indicating the number of characters of the corresponding noun;
a number indicator (1, 2, 4) representing singular, plural, or dual form;
a property indicator (a, b, c, d) representing semantic properties of the noun, such as animate entity, inanimate object, mental entity, or abstract entity;
a case indicator (1-9) representing nominative, genitive, accusative, dative, vocative, locative, ablative, instrumental, or reflexive case;
a gender indicator (1, 2, 3) representing masculine, feminine, or neuter gender;
an animacy indicator (1, 2) representing animate or inanimate status.

Furthermore, at least one deictic indicator selected from symbols representing "this", "that", "that (distal)", "there", or movement (., -, ~, →) may additionally be displayed at an upper portion of the subject symbol or the non-predicate symbol.

In another preferred embodiment of the present invention, in order to solve the aforementioned problem and based on the above-described embodiment, the subject symbol and the non-predicate symbol further include parentheses appended to the right thereof.
Within the parentheses, at least one of the following symbols representing residual phrases other than the subject and the predicate may be indicated:

a noun symbol representing a noun;
an adjective symbol representing an adjective;
an adverbial symbol representing an adverb or a prepositional phrase;
an infinitive-form symbol representing a "to" infinitive or a bare infinitive;
a gerund or participle symbol representing a verb in the "-ing" form;
an "-ed" form symbol representing a verb in the "-ed" form;
a being-participle symbol representing a "being + past participle" form; and
a derived-clause symbol representing a subordinate clause.

Accordingly, a linguistic expression corresponding to a modifying phrase applied to the subject symbol or the non-predicate symbol positioned before the parentheses may be expressed.

In another preferred embodiment of the present invention, in order to solve the aforementioned problem and based on the above-described embodiment, the upper-left subscript of the sentence centre symbol includes one selected from:

a symbol (0) representing spoken expression in accordance with temporal flow;
a symbol (1) representing left-to-right writing;
a symbol (2) representing right-to-left writing;
a symbol (3) representing top-to-bottom writing;
a symbol (4) representing bottom-to-top writing;
a symbol (5) representing drum language; and
a symbol (6) representing other writing systems, thereby providing a method for analysing a language structure using a linguistic expression.

In another preferred embodiment of the present invention, in order to solve the aforementioned problem and based on the above-described embodiment, the upper-right subscript of the sentence centre symbol includes:

a symbol (a) representing the literal expression of the sentence as written; and
a symbol (e) representing the semantic meaning of the sentence, thereby providing a method for analysing a language structure using a linguistic expression.

In another preferred embodiment of the present invention, a lower portion of the sentence centre symbol may include a symbol, represented by a numeral or a character, indicating the language to which the sentence belongs, thereby providing a method for analysing a language structure using a linguistic expression.

In another preferred embodiment of the present invention, the symbols may further comprise conjunction symbols representing conjunctions used in natural language, which may be appended in parallel, and punctuation symbols used in natural language, thereby enabling representation of sentence type in the linguistic expression.

[Effects of the Invention]

According to the method for analysing a language structure using a linguistic expression according to a preferred embodiment of the present invention, a sentence structure of a specific language may be subdivided and represented as a linguistic expression, thereby enabling precise structural analysis of a particular sentence in the language and improving efficiency in linguistic processing, including sentence recognition, interpretation, translation, and search.

According to the method for analysing a language structure using a linguistic expression according to a preferred embodiment of the present invention, the structure of a sentence in a specific language may be subdivided and represented in the form of a linguistic expression, thereby enabling systematic understanding of the structure of the language.

According to the method for analysing a language structure using a linguistic expression according to a preferred embodiment of the present invention, the degree of expression of the subdivided linguistic representation of a sentence structure may serve as an indicator for assessing the level of development of the language.

According to the method for analysing a language structure using a linguistic expression according to a preferred embodiment of the present invention, comparison of linguistic expressions representing subdivided sentence structures may enable evaluation of similarity between a specific language and other languages, thereby contributing to linguistic research.

Although the effects of the present invention have been described above in detail, the invention is not limited to the aforementioned effects, and additional effects derived in the course of achieving the above effects are also included within the scope of the present invention.

[Brief Description of Drawings]

FIG. 1 is an exemplary diagram illustrating a conventional linguistic tree in which the structure of a sentence is hierarchically classified and represented in the form of a tree diagram.

FIG. 2 is a flowchart illustrating an operational flow of a post-processing-based speech recognition error correction method using language analysis according to the prior art.

FIG. 3 is an exemplary diagram illustrating a result of syntactic analysis in a post-processing-based speech recognition error correction apparatus using language analysis according to the prior art.

FIG. 4 is a system configuration diagram illustrating a system in which the method for analysing a language structure using a linguistic expression according to a preferred embodiment of the present invention is implemented.

FIG. 5 is a structural diagram illustrating the structure of a linguistic expression in the method for analysing a language structure using a linguistic expression according to a preferred embodiment of the present invention.

FIG. 6 is an exemplary diagram illustrating an arrangement of subscript information (or auxiliary information) assigned to a subject symbol, a verb symbol, and a non-predicate symbol in the method for analysing a language structure using a linguistic expression according to a preferred embodiment of the present invention.

Throughout the specification, including the drawings and the detailed description, identical elements, as well as elements having identical functions and/or identical technical or physical effects, are denoted by the same reference numerals or the same names. Elements illustrated or described in different embodiments, and descriptions of their functions, may be interchangeable or applicable across different embodiments.

In addition, reference numerals indicated in one drawing may be omitted in other drawings for the sake of clarity and simplicity. Portions that are not related to the present invention or not relevant to the explanation of a specific part may be omitted from the drawings; however, such omission does not imply the absence of those portions.

Furthermore, reference numerals used in drawings of the prior art and those used in drawings of the present invention are independent of one another. It should be noted that even where identical reference numerals are used, they do not necessarily designate the same elements.

[Mode for Carrying Out the Invention]

Hereinafter, embodiments of the present invention will be described in detail with reference to the accompanying drawings so that a person skilled in the art may readily implement the invention.

The embodiments described below are not intended to limit the present invention, and it should be understood that the invention may be embodied in various different forms, including modifications, equivalents, and alternatives.

The features of the present invention and the effects resulting therefrom will become more apparent from the embodiments described in detail below with reference to the accompanying drawings.

In describing the embodiments of the present invention, detailed descriptions of well-known functions or configurations will be omitted where they are not necessary for a clear understanding of the invention. The terminology used herein is defined in consideration of the functions of the embodiments of the present invention and may vary depending on the intention or practice of users or operators. Accordingly, the definitions of such terms should be construed based on the overall content of the present specification.

Throughout the specification, when a part is described as being "connected" to another part, this includes not only a case of being "directly connected" but also a case of being "electrically connected" with one or more intermediate elements interposed therebetween.

Furthermore, when a part is described as "comprising" a component, this does not exclude the presence of additional components unless specifically stated otherwise, but rather means that one or more other features, numbers, steps, operations, elements, parts, or combinations thereof may further be present or added.

Hereinafter, with reference to FIGS. 4 to 6, the method for analysing a language structure using a linguistic expression according to a preferred embodiment of the present invention will be described in greater detail by way of specific examples.

First, the system in which the method for analysing a language structure using a linguistic expression according to a preferred embodiment of the present invention is implemented includes a morpheme and syntax analysis unit (100), a linguistic expression calculation unit (200), a linguistic expression database (300), and a linguistic expression learning algorithm unit (400).

The morpheme and syntax analysis unit (100) performs morpheme analysis on a sentence input in text form, analyses the sentence into words segmented in morpheme units and determines the part of speech of each word, and identifies syntactic relationships between the words based on the results of the morpheme analysis.

The linguistic expression calculation unit (200) generates a linguistic expression based on the parts of speech of words segmented into morpheme units and the syntactic relationships analysed by the morpheme and syntax analysis unit (100), in accordance with a linguistic expression learning algorithm provided by the linguistic expression learning algorithm unit (400). The process of generating the linguistic expression will be described in greater detail below.

The linguistic expression generated by the linguistic expression calculation unit (200) is stored in the linguistic expression database (300) together with the corresponding sentence, the results of morpheme analysis, and the results of syntactic analysis.

The linguistic expression learning algorithm unit (400), based on a pre-programmed algorithm implementing the method for analysing a language structure using a linguistic expression according to a preferred embodiment of the present invention, updates the linguistic expression generation algorithm by learning from previously generated linguistic expressions accumulated in the linguistic expression database (300), along with the associated sentences, morpheme analysis results, and syntactic analysis results. The updated linguistic expression generation algorithm is then provided to the linguistic expression calculation unit (200).

Hereinafter, the process by which the linguistic expression calculation unit (200) generates a linguistic expression, based on the parts of speech and syntactic relationships of words segmented into morpheme units by the morpheme and syntax analysis unit (100), and in accordance with the linguistic expression learning algorithm provided by the linguistic expression learning algorithm unit (400), will be described in detail with reference to specific examples.

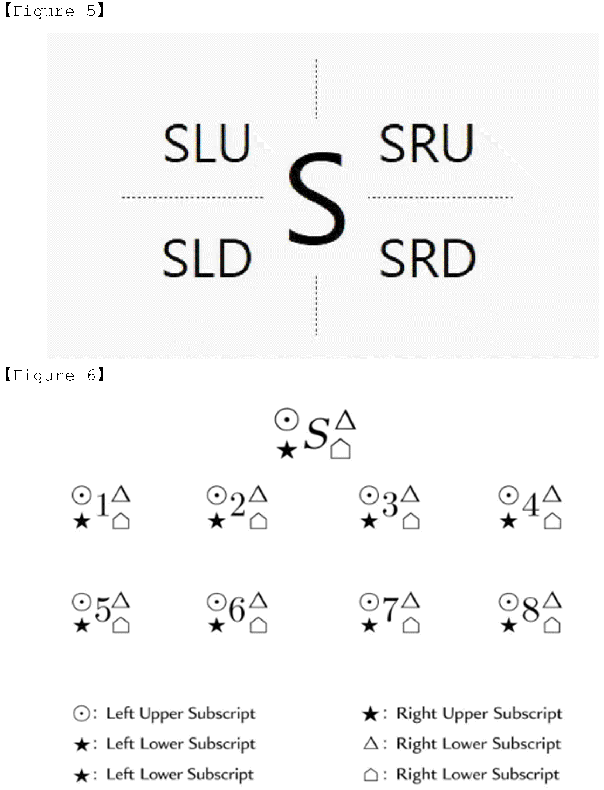

First, as illustrated in FIG. 5, the linguistic expression according to a preferred embodiment of the present invention is divided into four quadrants centred on a sentence centre symbol (S), referred to as an "integral S". The four quadrants are defined as: upper-left (SLU: Sentence Left Up), lower-left (SLD: Sentence Left Down), upper-right (SRU: Sentence Right Up), and lower-right (SRD: Sentence Right Down). In the present embodiment, the elements assigned to each quadrant around the sentence centre symbol (S) are provided by way of example, and the positional assignment may be varied as required.

In the method for analysing a language structure using a linguistic expression according to a preferred embodiment of the present invention, the lower quadrants, namely SLD and SRD, correspond to the predicate portion of the sentence and are assigned analysis symbols relating to the predicate. The upper quadrants, namely SLU and SRU, correspond to the non-predicate portion of the sentence, for example the subject portion and modifier portion.

With respect to the sentence centre symbol (S), the upper-left quadrant (SLU) is assigned a symbol representing the first non-predicate element appearing in the sentence. The non-predicate symbol assigned to SLU functions as the subject symbol.

For example, one of the non-predicate symbols including the subject symbol represented by a numeral, as shown in the table below, may be assigned.

Table1

| M1 | M2 | M3 |
|----|----|----|
| 1  | 4  | 8  |
| 2  | 5  |    |
| 3  | 6  |    |
|    | 7  |    |

In Table 1 above, the symbols may be divided into an M1 group, an M2 group, and an M3 group.

For example, the symbol "1" is a noun symbol representing a noun. A noun is a word that denotes an entity or a part of an entity. Depending on the manner of reference, a noun may be classified as a proper noun when identified by name, a demonstrative noun when identified by indication, or a personal noun when identified by person. More detailed information relating to the noun symbol "1" may be provided by appending parentheses to the right of the symbol "1" and specifying the relevant details within the parentheses.

The symbol "2" is an adjective symbol representing an adjective. An adjective is a word corresponding to the expression "what kind of" in response to a question such as "what is it like?", and serves to describe or qualify a noun.

An adjective modifies a noun by specifying or restricting the meaning of the noun, and may be positioned either before or after the noun it modifies.

The adjective symbol "2" may include determiners such as "a", "an", "the", "this", and "that".

In addition, distinguishing marks, such as a dot (·), a bar (-), or a tilde (~), may be appended above the adjective symbol "2" to differentiate among various types of adjectives.

The symbol "3" is an adverbial symbol representing an adverb or a prepositional phrase.

An adverb is a word that modifies elements other than a noun and restricts or specifies their meaning. In particular, an adverb may modify a verb, an adjective, another adverb, or an entire sentence.

Where the adverb consists of a single word, it may be represented as "$3._1$", or alternatively as "3" with the character-count indicator ".1" omitted.

Where a plurality of adverbs is present, the symbol may be represented as "3.n", wherein "n" denotes the number of words, indicated by means of the character-count symbol (.).

Meanwhile, when the symbol "3" represents a preposition or a prepositional phrase, it is distinguished from the adverbial meaning of "$\overset{o}{3}$" by appending a circular mark above the symbol "3", thereby indicating a prepositional form.

Where the prepositional phrase consists of two or more words, a character-count indicator (.) together with a numeral (n) corresponding to the number of words may be additionally assigned "$\overset{o}{3}_{.n}$".

Furthermore, parentheses may be appended to the right of the symbol, and detailed information regarding the specific content of the prepositional phrase may be indicated within the parentheses "$\overset{o}{3}$".

The symbol "4" is an infinitive-form symbol representing a "to + base verb" infinitive or a bare infinitive (i.e. without "to").

The symbol "5" is a gerund or participle symbol representing a verb in the "-ing" form (verb + ing).

The symbol "6" is an "-ed" form symbol representing a verb in the past participle form (verb + ed).

The symbol "7" is a being-participle symbol representing a verb form in the structure "being + past participle (pp)".

The symbols "4" to "7", belonging to the M2 group, represent derived forms of verbs.

The symbol "8", belonging to the M3 group, is a derived-clause symbol representing a subordinate clause.

The non-predicate symbols described above may, as illustrated in FIG. 6, further include subscript indicators assigned to one or more of four subscript positions, namely an upper-left subscript, a lower-left subscript, an upper-right subscript, and a lower-right subscript, centred on the respective subject symbol or non-predicate symbol.

In at least one of the four subscript positions, there may be assigned one or more of the following indicators:

a person indicator (1-4) representing first person, second person, third person, or impersonal form; a character-count indicator (.) together with a numeral indicating the number of characters of the corresponding noun; a number indicator (1, 2, 4) representing singular, plural, or dual form; a property indicator (a, b, c, d) representing semantic properties of the noun, such as animate entity, inanimate object, mental entity, or abstract entity; a case indicator (1-9) representing nominative, genitive, accusative, dative, vocative, locative, ablative, instrumental, or reflexive case; a gender indicator (1, 2, 3) representing masculine, feminine, or neuter gender; an animacy indicator (1, 2) representing animate or inanimate status.

Furthermore, at least one deictic indicator selected from symbols representing "this", "that", "that (distal)", "there", or movement (., -, ~, →) may be additionally displayed at an upper portion of the subject symbol or the non-predicate symbol.

The non-predicate symbols described above are not limited to the subject portion in the upper-left quadrant (SLU) of the sentence centre symbol (S), but may likewise be applied to the modifier portion located in the upper-right quadrant (SRU).

In addition, where a plurality of non-predicate elements are present, the corresponding symbols may be repeatedly arranged in accordance with the number of such elements to generate the linguistic expression.

Meanwhile, a core verb (e) is displayed in the lower-left quadrant (SLD) or the lower-right quadrant (SRD) of the sentence centre symbol (S). In the case of a compound verb consisting of two or more words, the first word constitutes the core verb (e), and the remaining words, excluding the core verb (e), constitute residual verbs (ω). In the case of a single-word verb, the verb itself constitutes the core verb (e).

The core verb (e) displayed in the lower-left quadrant (SLD) or the lower-right quadrant (SRD) has the following functions:

1. The core verb (e) determines the temporal reference (tense) of the sentence.
2. The core verb (e) requires a subject preceding or associated therewith.
3. When the core verb (e) is positioned before the subject in the upper-left quadrant (SLU), the sentence is formed as an interrogative sentence.
4. When "not" follows the core verb (e), the sentence is formed as a negative sentence.
5. When the core verb (e) is positioned before the subject together with "not", the sentence is formed as a negative interrogative sentence.

6. In a derived clause, the core verb (e) requires a derived-clause marker to appear at the beginning of the clause.

7. When the core verb (e) in a derived clause moves outside the clause, the subject preceding the core verb (e) and the derived-clause marker are omitted.

For example, consider the sentence "Do fishes swim?".

Since "fishes" is a noun functioning as the subject, the noun symbol "1" is assigned to the subject position in the upper-left quadrant (SLU).

Because the core verb "Do" appears before the subject "fishes", the core verb symbol ($\epsilon$) is assigned to the lower-left quadrant (SLD) of the sentence centre symbol (S), and is positioned so as to precede the subject symbol "1", thereby indicating interrogative structure.

The remaining verb ($\omega$), namely "swim", is an intransitive verb other than a "be" verb. Accordingly, it is represented by the first verb (V1) symbol "1" assigned to the lower-right quadrant (SRD).

As a result, a mathematical-expression-like linguistic expression, for example "$\epsilon$1S1?", may be derived.

In this case, a punctuation symbol such as "?" used in ordinary sentences may be appended to indicate interrogative sentence type.

In the lower-right quadrant (SRD) of the sentence centre symbol (S), a verb-type symbol (or predicate symbol) is represented by a numeral or a symbol.

For example, in the case of English:

the first verb (V1), representing all intransitive verbs other than the verb "be", is indicated by the numeral "1";

the second verb (V2), representing the verb "be", is indicated by the numeral "2";

the third verb (V3), representing all transitive verbs except the fourth verb (V4), is indicated by the numeral "3"; and

the fourth verb (V4), representing a transitive verb requiring both an object and an object complement, is indicated by the numeral "4".

For example, a first verb (V1) may be expressed in the following manner.

Example: "Water flows."

In the above sentence, according to the method for analysing a language structure using a linguistic expression according to a preferred embodiment of the present invention, "water" is a noun functioning as the subject and is therefore represented by the noun symbol "1" assigned to the upper-left quadrant (SLU).

Since "flows" is an intransitive verb other than a "be" verb, it is represented by the first verb (V1) symbol "1" assigned to the lower-right quadrant (SRD).

Accordingly, a mathematical-expression-like linguistic expression, for example "$^1S_1$", may be generated.

Furthermore, the symbols described above may further include conjunction symbols representing conjunctions used in natural language, which may be added in parallel to the existing symbols.

In addition, punctuation symbols used in natural language may be incorporated so as to represent the type of sentence.

Furthermore, in the method for analysing a language structure using a linguistic expression according to a preferred embodiment of the present invention, all symbols (for example, numerals) may be written with spaces therebetween, and numerals within parentheses may likewise be spaced. However, no space is inserted between a symbol and the parentheses immediately following that symbol.

Meanwhile, in the method for analysing a language structure using a linguistic expression according to a preferred embodiment of the present invention, the linguistic expression may be represented in a simplified form, or alternatively in a basic (expanded) form reflecting a more detailed analysis.

For example, in the sentence "She was a student.", a simplified linguistic expression (simple form) may be represented as follows.

$$ {}^1S_2{}^{1.2} \cdot $$

In contrast, in the basic (expanded) form, the subject "She" is represented by the noun symbol "1", since it is a noun.

Because it is in the third person, a person indicator "3" may be assigned to the lower-right subscript position of the noun symbol "$1_3$", thereby providing a more specific representation, for example "$1_3$".

Furthermore, since "She" is a personal pronoun, a circular mark (o) may additionally be appended to the upper portion of the noun symbol "1", thereby yielding a more detailed representation, for example a noun symbol "$\overset{o}{1}_3$" marked with the circular indicator and including the third-person subscript.

Furthermore, since "She" is singular, a singular-number indicator "1" may be assigned to the upper-right subscript position of the noun symbol "$\overset{o}{1}{}^1$".

Since "She" denotes a female person, a gender indicator "2" (representing feminine gender) may be assigned to the lower-left subscript position "$_2\overset{o}{1}$".

Since the pronoun functions in the nominative case, a case indicator "1" (representing nominative case) may be assigned to the upper-left subscript position "$1_1\overset{o}{}$".

In addition, since "She" consists of a single word, a character-count indicator corresponding to one word may be assigned to the lower-right subscript position" $\overset{o}{1}_{.1}$ "; however, as the symbol ".1" representing a single word is ordinarily omitted, this indicator may be omitted in practice.

Taken together, the subject "She" is represented as "1" in a simplified expression. However, in a basic (expanded) expression, the noun symbol may be represented in a more specific form including the respective subscript indicators" $\overset{o}{{}_2^1 1^1_{3.1}}$ ", and the character-count indicator ".1" may optionally be omitted.

Furthermore, the verb "was" is a second verb (V2), that is, a form of the copular verb "be". Accordingly, with respect to the sentence centre symbol (S), the V2 symbol "2" is assigned to the lower-right quadrant (SRD). Since "was" is in the past tense, a tense indicator "2" may be assigned to the upper-left subscript position of the verb-type symbol "2", thereby yielding "2$^2$" (i.e. the V2 symbol with a past-tense subscript).

Because the verb is singular, a number indicator "1" may be assigned to the upper-right subscript position of the verb-type symbol, thereby yielding "2$^1$".

Further, since the verb consists of a single word, the character-count indicator ".1" may be omitted, and the symbol may simply be represented as "2".

Taken together, "was" is represented as a past-tense singular V2 verb, and the verb component alone may be expressed in the linguistic expression format as described above.

$$S\,{}_{2}{}^{2}{}^{1}$$

Furthermore, since "a student" is a noun phrase consisting of two words, it may be represented as "1.2" by using the character-count symbol (.) to indicate the number of constituent words.

More specifically, because the noun phrase is modified by the article "a", it may first be expressed by adding a dot (·) to the upper portion of the adjective symbol "2" representing the determiner, followed by the noun symbol "1" representing "student".

Accordingly, the noun phrase may be expressed as "1.2", and parentheses may be appended to the right thereof to include more detailed information, thereby yielding "1.2 (0 1)". Since "student" refers to a human being and therefore represents an animate entity, an animacy indicator "a" may be assigned as a right-side subscript to the noun symbol "1", thereby providing a more specific representation, for example, " $\overset{o}{{}_2^1 1^1_3}$ ".

In addition, where the sentence is a declarative sentence, a period (.) may be appended after the parentheses.

As a result, the basic expression of "She was a student." may be represented as follows.

$$\overset{o}{{}_2^1 1^1_3}\ \ S\ {}_{2}{}^{2}{}^{1}\ \ 1_{.2}(\overset{.}{2}\ 1^a).$$

Accordingly, in the method for analysing a language structure using a linguistic expression according to a preferred embodiment of the present invention, the hierarchical depth of representation may be selectively adjusted as described above, depending on analytical requirements or design considerations.

The method for analysing a language structure using a linguistic expression according to a preferred embodiment of the present invention may also be embodied in the form of a recording medium storing computer-executable instructions, such as an application or a program module, which are executable by a computer.

The computer-readable medium may be any available medium that can be accessed by a computer, and may include both volatile and non-volatile media, as well as removable and non-removable media.

Furthermore, the computer-readable medium may include computer storage media. Computer storage media include volatile and non-volatile, removable and non-removable media implemented in any method or technology for storing information, such as computer-readable instructions, data structures, program modules, or other data.

According to an embodiment of the present invention, the method for analysing a language structure using a linguistic expression may be executed by an application pre-installed on a terminal device, which may include a program incorporated in a platform or operating system embedded in the terminal device.

Alternatively, the method may be executed by an application (i.e. a program) installed by a user on a master terminal device through an application provision server, such as an application store server, an application server, or a web server associated with the relevant service.

In this sense, the method according to an embodiment of the present invention may be implemented in the form of an application (i.e. a program), whether pre-installed on the terminal device or installed by the user, and may be stored on a computer-readable recording medium so as to be executable by a computer, such as the terminal device.

The foregoing description of the present invention has been provided for illustrative purposes only.

A person skilled in the art will appreciate that the invention may be embodied in other specific forms without departing from the technical idea or essential characteristics thereof. Accordingly, the embodiments described above are to be regarded in all respects as illustrative and not restrictive.

For example, individual components described as being implemented in an integrated form may be implemented in a distributed manner, and conversely, components described as being implemented in a distributed manner may be implemented in an integrated form.

The scope of protection of the present invention is defined by the appended claims.

The scope of the present invention shall be defined by the appended claims rather than by the foregoing detailed description.

Accordingly, the meaning and scope of the claims, as well as all modifications, variations, and equivalents derived therefrom, shall be construed as falling within the scope of the present invention.

**Claims**

1. A method for analysing a structure of a language using a linguistic expression, the method comprising:

   analysing, by a morpheme and syntax analysis unit, morphemes and syntactic structure of a target sentence; and
   generating, by a linguistic expression calculation unit, a linguistic expression for the morphemes and syntactic structure of the sentence analysed by the morpheme and syntax analysis unit, based on a pre-trained linguistic expression learning algorithm provided from a linguistic expression learning algorithm unit,
   wherein the linguistic expression calculation unit:

   • divides the sentence into four quadrants centred on a sentence centre symbol, namely an upper-left quadrant, a lower-left quadrant, an upper-right quadrant, and a lower-right quadrant;
   • assigns a subject symbol to the upper-left quadrant;
   • assigns a core verb symbol to the lower-left quadrant;
   • assigns a verb-type symbol to the lower-right quadrant; and
   • assigns, to the upper-right quadrant, a non-predicate symbol representing remaining phrases of the sentence excluding the subject and the verb.

2. The method according to Claim 1, wherein the sentence centre symbol, the subject symbol, the core verb symbol, the verb-type symbol, and the non-predicate symbol each comprise four subscript positions consisting of:

   • an upper-left subscript;
   • a lower-left subscript;
   • an upper-right subscript; and
   • a lower-right subscript.

3. The method according to Claim 1, wherein the verb-type symbol comprises:

   • a first verb (V1) symbol representing all intransitive verbs other than a "be" verb;
   • a second verb (V2) symbol representing a "be" verb;
   • a third verb (V3) symbol representing all transitive verbs except a fourth verb (V4); and
   • a fourth verb (V4) symbol representing a transitive verb requiring both an object and an object complement.

4. The method according to Claim 3, wherein at least one of the upper-left, lower-left, upper-right, and lower-right subscripts of the verb-type symbol is assigned, for each of the V1 to V4 symbols, one selected from:

   • a person indicator;
   • a number indicator representing singular or plural;
   • a tense indicator selected from base form, present tense, past tense, present perfect tense, or past perfect tense.

5. The method according to Claim 1, wherein the subject symbol and the non-predicate symbol comprise at least one selected from:

   • a noun symbol representing a noun;
   • an adjective symbol representing an adjective;
   • an adverbial symbol representing an adverb or a prepositional phrase;
   • an infinitive-form symbol representing a "to" infinitive or a bare infinitive;
   • a gerund or participle symbol representing a verb in "-ing" form;
   • an "-ed" form symbol representing a verb in "-ed" form;
   • a being-participle symbol representing a "being + past participle" form;
   • a derived-clause symbol representing a subordinate clause.

6. The method according to Claim 5, wherein the subject symbol and the non-predicate symbol further comprise, in at least one of the four subscript positions centred on the respective symbol:

   • a person indicator (1-4) representing first person, second person, third person, or impersonal form;

• a character-count indicator (.) indicating the number of characters of the noun together with a numeral;

• a number indicator (1, 2, 4) representing singular, plural, or dual form;

• a property indicator (a, b, c, d) representing semantic properties of a noun including animate object, inanimate object, mental entity, or abstract entity;

• a case indicator (1-9) representing nominative, genitive, accusative, dative, vocative, locative, ablative, instrumental, or reflexive case;

• a gender indicator (1, 2, 3) representing masculine, feminine, or neuter gender;

• an animacy indicator (1, 2) representing animate or inanimate; and

wherein a deictic indicator selected from symbols representing "this", "that", "that (distal)", "there", or movement (., -, ~, →) is additionally displayed at an upper portion of the subject symbol or the non-predicate symbol.

7. The method according to Claim 5,

wherein the subject symbol and the non-predicate symbol further include parentheses positioned to the right thereof, and at least one of:

• a noun symbol;
• an adjective symbol;
• an adverbial symbol;
• an infinitive-form symbol;
• a gerund or participle symbol;
• an "-ed" form symbol;
• a being-participle symbol;
• a derived-clause symbol,

is displayed within the parentheses to represent a modifying phrase applied to the subject symbol or the non-predicate symbol positioned before the parentheses.

8. The method according to Claim 2, wherein the upper-left subscript of the sentence centre symbol comprises one selected from:

• a symbol (0) representing spoken expression according to temporal flow;
• a symbol (1) representing left-to-right writing;
• a symbol (2) representing right-to-left writing;
• a symbol (3) representing top-to-bottom writing;

• a symbol (4) representing bottom-to-top writing;
• a symbol (5) representing drum language;
• a symbol (6) representing other writing systems.

9. The method according to Claim 2, wherein the upper-right subscript of the sentence centre symbol comprises:

• a symbol (a) representing literal expression as written in the sentence;
• a symbol (e) representing semantic meaning of the sentence; and
• a numeral symbol (n) representing the number of minimal sentence-classification units.

10. The method according to Claim 2, wherein a lower portion of the sentence centre symbol comprises a symbol, represented by a numeral or a character, indicating a language to which the sentence belongs.

11. The method according to any one of Claims 1 to 10,

wherein the symbols further comprise:

• conjunction symbols representing conjunctions used in natural language, which may be added in parallel; and
• punctuation symbols representing sentence types used in natural language,

thereby enabling expression of sentence type in the linguistic expression.

【Figure 1】

【Figure 2】

【Figure 3】

【Figure 4】

【Figure 5】

【Figure 6】

⊙ : Left Upper Subscript          ★ : Right Upper Subscript

★ : Left Lower Subscript          △ : Right Lower Subscript

★ : Left Lower Subscript          ⌂ : Right Lower Subscript

# EP 4 756 666 A1

## INTERNATIONAL SEARCH REPORT

| International application No. |
| --- |
| **PCT/KR2024/011396** |

### A. CLASSIFICATION OF SUBJECT MATTER

**G06F 40/205**(2020.01)i; **G06F 40/253**(2020.01)i; **G06F 40/268**(2020.01)i; **G06F 40/289**(2020.01)i; **G06F 40/151**(2020.01)i; **G06N 20/00**(2019.01)i

According to International Patent Classification (IPC) or to both national classification and IPC

### B. FIELDS SEARCHED

Minimum documentation searched (classification system followed by classification symbols)

G06F 40/205(2020.01); G06F 17/27(2006.01); G06F 17/28(2006.01); G06F 3/16(2006.01); G06F 40/211(2020.01); G06F 40/216(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 언어(language), 형태소(morpheme), 구문(sentence), 기호(symbol), 첨자(subscript)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-1995-0015053 A (SAMSUNG ELECTRONICS CO., LTD.) 16 June 1995 (1995-06-16)<br>See claims 1-7; and figure 2. | 1-11 |
| A | CN 112949286 A (BEIJING HANYA TIANCHENG EDUCATION TECHNOLOGY CO., LTD.) 11 June 2021 (2021-06-11)<br>See paragraphs [0144]-[0348]; claims 1-6; and figures 1-4. | 1-11 |
| A | CN 106708800 A (PENG, Weiming et al.) 24 May 2017 (2017-05-24)<br>See paragraphs [0065]-[0155]; claims 1-9; and figures 1-15. | 1-11 |
| A | JP 2008-097631 A (TOSHIBA CORP.) 24 April 2008 (2008-04-24)<br>See paragraphs [0012]-[0282]; claims 1-3; and figures 1-31. | 1-11 |
| A | JP 07-295985 A (SHARP CORP.) 10 November 1995 (1995-11-10)<br>See paragraphs [0028]-[0058]; claims 1-3; and figures 1-13. | 1-11 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 November 2024** | **21 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011396**

| Patent document cited in search report | | | Publication date (day/month/year) | Patent family member(s) | | | Publication date (day/month/year) |
|---|---|---|---|---|---|---|---|
| KR | 10-1995-0015053 | A | 16 June 1995 | None | | | |
| CN | 112949286 | A | 11 June 2021 | CN | 112949286 | B | 04 August 2023 |
| CN | 106708800 | A | 24 May 2017 | None | | | |
| JP | 2008-097631 | A | 24 April 2008 | JP | 4105756 | B2 | 25 June 2008 |
| JP | 07-295985 | A | 10 November 1995 | None | | | |

Form PCT/ISA/210 (patent family annex) (July 2022)

**EP 4 756 666 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180057922